Europäisches Patentamt

European Patent Office

Office européen des brevets

(11) Veröffentlichungsnummer: **0 288 805**
**A2**

(12) **EUROPÄISCHE PATENTANMELDUNG**

(21) Anmeldenummer: 88105618.8

(51) Int. Cl.⁴: **B09B 5/00**

(22) Anmeldetag: 08.04.88

(30) Priorität: 11.04.87 DE 3712432

(43) Veröffentlichungstag der Anmeldung:
02.11.88 Patentblatt 88/44

(84) Benannte Vertragsstaaten:
AT BE CH DE ES FR GB GR IT LI LU NL SE

(71) Anmelder: In der Schmitten, Wolfgang
Elsepassweg 130
D-4240 Emmerich(DE)

(72) Erfinder: In der Schmitten, Wolfgang
Elsepassweg 130
D-4240 Emmerich(DE)

(74) Vertreter: Patentanwälte Dipl.-Ing. Alex
Stenger Dipl.-Ing. Wolfram Watzke Dipl.-Ing.
Heinz J. Ring
Kaiser-Friedrich-Ring 70
D-4000 Düsseldorf 11(DE)

(54) Verfahren zur Dekontaminierung von verseuchten Bodenschichten beliebiger Tiefe.

(57) Die Erfindung betrifft ein Verfahren zur Dekontaminierung von verseuchten Bodenschichten beliebiger Tiefe mittels Biomasse aus Mikroorganismen, die über eine Mehrzahl von in die verseuchten Bodenschichten niedergebrachten Versorgungsbohrungen entsprechend der zuvor ermittelten Lage der Verseuchung ebenso wie Nährstoffe eingebracht werden, wobei über Kontrollbohrungen eine Kontrolle der ablaufenden mikrobiologischen Umsetzung erfolgt. Un einen schnellen und gezielten Abbau der Verseuchung zu gewährleisten, wird die Biomasse aus adaptierten Mikroorganismen entsprechend der Lage und Konzentration der räumlichen Verseuchung sowohl bezüglich der horizontalen Erstreckung als auch bezüglich der vertikalen Mächtigkeit der kontaminierten Bodenschichten mit einem auf die Durchlässigkeit des kontaminierten Bodens abgestellten Druck und in einer auf die Konzentration der Verseuchung abgestellten sowie das Rückhaltevermögen des kontaminierten Bodens nicht überschreitenden Menge aus Biomasse und Feuchte eingebracht.

Fig. 1

## Verfahren zur Dekontaminierung von verseuchten Bodenschichten beliebiger Tiefe

Die Erfindung betrifft ein Verfahren zur Dekontaminierung von verseuchten Bodenschichten beliebiger Tiefe mittels Biomasse aus Mikroorganismen, die über eine Mehrzahl von in die verseuchten Bodenschichten niedergebrachten Versorgungsbohrungen entsprechend der zuvor ermittelten Lage der Verseuchung ebenso wie Nährstoffe eingebracht werden, wobei über Kontrollbohrungen eine Kontrolle der ablaufenden mikrobiologischen Umsetzung erfogt.

Sowohl bei der Förderung und beim Transport von Mineralöl als auch bei der Herstellung von Mineralölprodukten, deren Umschlag und Lagerung kommt es trotz umfangreicher Sicherungsmaßnahmen immer wieder zu Unfällen, die eine Ölverseuchung des Bodens zur Folge haben. Außerdem existieren sogenannte Altlasten, bei denen Bodenschichten auch größerer Tiefe durch Mineralöl, Mineralölprodukte oder andere Schadstoffe verseucht sind, und zwar entweder durch Eindringen einer größeren Menge aufgrund eines Unfalles oder durch ständiges Einsickern geringerer Schadstoffmengen.

Sofern sich der Schadstoff noch auf der Bodenoberfläche befindet, kann er auf chemischem oder mechanischem Weg möglichst schnell beseitigt werden. Sind die Schadstoffe jedoch bereits in den Boden eingesickert, gab es lange Zeit nur die Möglichkeit, den verseuchten Boden insgesamt abzutragen und entweder auf einer Sondermülldeponie zu lagern oder zu verbrennen. Da einerseits ausreichender Deponieraum nicht zur Verfügung steht und andererseits eine derartige Ablagerung nur eine räumliche und zeitliche Verlagerung des Umweltproblems darstellt, ist der Verbrennung des verseuchten Bodens der Vorzug zu geben. Außer einem hohen Energieaufwand haftet dieser Art der Schadstoffbeseitigung jedoch der Nachteil an, daß das nach der Verbrennung vorliegende Produkt zwar für die Umwelt unbedenklich, biologisch jedoch unbrauchbar ist.

Um diese nachteilige Art der Schadstoffbeseitigung zu vermeiden, werden seit Jahren Verfahren zur Dekontaminierung von verseuchten Bodenschichten durch den Einsatz von Mikroorganismen entwickelt. Diese Mikroorganismen zersetzen die Kohlenwasserstoffe der Mineralöle und Mineralölprodukte auf biochemischem Weg in Kohlendioxid und Wasser. Dieser natürliche Abbau der Schadstoffe beruht auf der Lebenstätigkeit der Mikroorganismen, die die aus Kohlenwasserstoffen bestehenden Schadstoffe zum Aufbau neuer Zellsubstanz und als Energiespender hierfür verwerten und damit aus den verseuchten Bodenschichten eliminieren.

Da die natürlich vorhandenen Mikroorganismen sowohl hinsichtlich ihrer Menge als auch bezüglich ihrer Fähigkeit, Kohlenwasserstoff in Kohlendioxid und Wasser zu zersetzen. zur Dekontaminierung verseuchter Bodenschichten innerhalb kürzerer Zeit nicht ausreichen und höhere Schadstoffkonzentrationen die Lebensfähigkeit derartiger Mikroorganismen zerstören können, sind in den letzten Jahren spezifisch wirkende Mikroorganismen gezüchtet worden, die durch Auslese spezieller Eigenschaften für den entsprechenden Schadstoff eine besonders gute Abbaufähigkeit besitzen und eine leistungsfähige Biomasse bilden. Da diese Mikroorganismen gentechnisch nicht verändert sind, sondern spezielle Züch tungen natürlicher Mikroorganismen darstellen, ist ihr Einsatz ökologisch unbedenklich und unschädlich für Menschen und Tiere. Derartige Biomassen stehen zwischenzeitlich für den Abbau von Mineralöl und Mineralölprodukten in Form getrockneter Lagerware zur Verfügung, die innerhalb kürzester Zeit durch Zufuhr von Feuchtigkeit und ggf. spezieller Nährstoffe aktiviert werden kann.

Für den Einsatz dieser Biomasse aus adaptierten Mikroorganismen sind verschiedene Verfahren bekannt.

Wenn es sich bei der Verseuchung mit Mineralöl oder Mineralölprodukten lediglich um eine Verunreinigung der Bodenoberfläche bis etwa 40 ca Tiefe handelt, wird die dem jeweiligen Schadstoff angepaßte Biomasse auf die Bodenoberfläche aufgesprüht, ggf. unter gleichzeitiger Schaumbildung. Dieses Dekontaminierungsverfahren hat sich in der Praxis auch bei großflächigen Ölverseuchungen bewährt, da weder bei der Aufbringung der Biomasse, noch bei der Überprüfung der biochemischen Zersetzung im Hinblick auf die geringe Tiefe der Verseuchung Probleme bestehen.

Sofern Bodenschichten bis ca. 1 m Tiefe ölverseucht sind, wird zuerst durch Umbrechen oder Einfräsen von entsprechend tiefen Furchen der verseuchte Boden aufbereitet. Anschließend werden die Mikroorganismen durch Verrieseln aufgebracht, vorzugsweise unter Beigabe von Nährstoffen. Unter der Voraussetzung, daß durch die Bodenaufbereitung eine ausreichende Homogenisierung der ursprünglich unterschiedlichen Schadstoffkonzentration erreicht wurde, hat sich auch dieses Dekontaminierungsverfahren in der Praxis bewährt, zumal bei einer derartigen geringen Tiefe der Ölverseuchung eine Überprüfung des Endergebnisses der biochemischen Zersetzung der Kohlenwasserstoffe keine Schwierigkeiten bereitet.

Erhebliche und in der Praxis bisher nicht gelöste Schwierigkeiten bereitet die biologische Dekontaminierung verseuchter Bodenschichten bis ca. 20 m Tiefe sowie die biologische Entsorgung verunreinigter Grundwässer.

Für diese Fälle, die insbesondere bei Altlasten auftreten, ist aus der EP-OS 170 862 ein Verfahren bekannt, bei dem über eine Mehrzahl von in die verseuchten Bodenschichten niedergebrachten Versorgungsbohrungen Nährstoffe für die in den verseuchten Bodenschichten vorhandenen Mikroorganismen sowie bei Bedarf zusätzliche Mikroorganismen eingebracht werden. Diese Einbringung erfolgt durch Schaffung von Nestern von Mikroorganismen unter Verwendung sowohl der Versorgungsbohrungen als auch von Kontrollbohrungen, die primär der Kontrolle der ablaufenden mikrobiologischen Umsetzung dienen.

Das aus der EP-OS 170 862 bekannte Verfahren hat verschiedene Nachteile, die eine Verwertung in der Praxis einschränken.

Zum einen soll nach diesem Verfahren die mikrobiologische Umsetzung im wesentlichen durch die in den verseuchten Bodenschichten vorhandenen Mikroorganismen erfolgen, weshalb diese mit in Wasser gelösten Nährstoffen versorgt werden sollen. Diese Wasser-Nährstoff-Lösung ist jedoch auch dann nicht in der Lage, die kontaminierten Bodenschichten einigermaßen gleichmäßig zu durchdringen, wenn sie über eine Mehrzahl von entsprechend der zuvor ermittelten Lage der Verseuchung niedergebrachten Versorgungsbohrungen eingebracht wird, weil die Verseuchung das Eindringen der wässrigen Lösung in die Bodenschichten verhindert, und zwar je mehr, je größer die Konzentration der Verseuchung ist. Stark verseuchte Bodenschichten werden somit am wenigsten mit Nährstoffen versorgt. Das mit Nährstoffen versetzte Wasser sucht sich stattdessen unter Umgehung der verseuchten Bodenschichten Spalte, Verwerfungen und andere Wege, um in die Tiefe und damit ins Grundwasser abzulaufen. Anstelle einer Belieferung der verseuchten Bodenschichten mit Nährstoffen erfolgt somit eine unerwünschte und unzulässige Belastung des Grundwassers mit den insbesondere Nitrate enthaltenden Nährstoffen.

Selbst wenn jedoch insbesondere geringer verseuchte Bodenschichten nach dem bekannten Verfahren mit Nährstoffen versorgt werden, ergibt sich nicht die gewünschte schnelle mikrobiologische Umsetzung, weil ein Großteil der vor der Verseuchung in den Bodenschichten vorhandenen Mikroorganismen abgestorben oder durch die Verseuchung derart geschädigt ist, daß nur eine unzureichende mikrobiologische Umsetzung stattfinden kann.

Das mit dem bekannten Verfahren angestrebte Ergebnis läßt sich auch dann nicht erzielen, wenn zusätzliche Mikroorganismen nesterweise in die verseuchten Bodenschichten eingebracht werden, weil einerseits diese eingebrachten Mikroorganismen mit der Wasser-Nährstoff-Lösung wieder ausgeschwemmt werden, ohne in die verseuchten Bodenschichten einzudringen, und andererseits diese konzentriert eingebrachten Mikroorganismen nicht die gewünschte Effizienz haben, zumal sie infolge ihrer nesterweisen Einbringung ohne die Gefahr der Ausschwemmung nicht ausreichend mit Nährstoffen versorgt werden können.

Die mit dem bekannten Verfahren vorgeschlagene Einbringung der Nährstoffe und der Mikroorganismen unter Druck vergrößert die Gefahr der Ausschwemmung und Grundwasserverseuchung sowohl mit Nährstoffen als auch mit ausgespülten Schadstoffen. Eine hiermit verbundene unkontrollierbare Zufuhr von Feuchtigkeit führt - schließlich dazu, daß die Bodenschichten verschlammen. Diese Verschlammung verringert nicht nur die Tragfähigkeit des Bodens, wodurch sich kritische Situationen für aufstehende Gebäude ergeben können, sondern führt darüber hinaus zu einer Undurchlässigkeit der Bodenschichten, wodurch die Verteilung der zur Dekontamination eingesetzten Biomasse weiter behindert oder sogar unterbunden wird.

Auch die mit dem bekannten Verfahren vorgeschlagene Kontrolle des in der Tiefe ablaufenden biochemischen Zersetzungsvorganges mittels zusätzlicher Kontrollbohrungen ist in der Praxis nicht möglich. Wenn die Biomasse aus Mikroorganismen zur Entseuchung der tiefen Bodenschichten über Erdbohrungen in die Tiefe eingeleitet und durch gezielt, vorzugsweise in Fließrichtung des Grundwassers hinter den Erdbohrungen eingebrachte Entnahmebohrungen wieder abgesaugt und die dem Tiefgrund entzogene Biomasse einem oberirdisch angeordneten Bioreaktor zugeleitet wird, ergibt sich zwar ein Meßergebnis, das aber nicht der mikrobiologischen Umsetzung in den tiefen Bodenschichten entspricht. Es ist bei dem bekannten Verfahren weder feststellbar, ob alle Bereiche mit Biomasse versorgt worden sind, so daß Teilmengen des verseuchten Bodens vom biochemischen Zersetzungsvorgang ausgenommen bleiben könnten, noch kann sichergestellt werden, daß die zur Dekontaminierung notwendige Menge der Mikroorganismen die verseuchten Bodenschichten erreicht, so daß sich auch durch die Rückführung der im Spülwasser befindlichen Lösungen keine Aussage darüber machen läßt, was in der Tiefe passiert.

Der Erfindung liegt ausgehend von dem aus der EP-OS 170 862 Bekannten die Aufgabe zugrunde, ein Verfahren zur Dekontaminierung von verseuchten Bodenschichten beliebiger Tiefe mittels eingebrachter Biomasse aus Mikroorganismen zu schaffen, das die voranstehend geschilderten Nachteile vermeidet und einen schnellen und gezielten Abbau der Verseuchung auch unter Gebäuden und in Industrieanlagen gestattet und gleichzeitig schädliche Grundwasserverunreinigungen vermeidet.

Diese Aufgabenstellung wird durch die Erfindung dadurch gelöst, daß die Biomasse aus adaptierten Mikroorganismen entsprechend der Lage und Konzentration der räumlichen Verseuchung sowohl bezüglich der horizontalen Erstreckung als auch bezüglich der vertikalen Mächtigkeit der kontaminierten Bodenschichten mit einem auf die Durchlässigkeit des kontaminierten Bodens abgestellten Druck und in einer auf die Konzentration der Verseuchung abgestellten sowie das Rückhaltevermögen des kontaminierten Bodens nicht überschreitenden Menge aus Biomasse und Feuchte eingebracht wird.

Mit dem erfindungsgemäßen Verfahren ist eine vollständige Dekontaminierung verseuchter Bodenschichten beliebiger Tiefe innerhalb kürzester Frist möglich, wobei die in der Tiefe ablaufenden biochemischen Zersetzungsvorgänge jederzeit steuerbar und überprüfbar sind. Da die Biomasse aus adaptierten Mikroorganismen in einer Menge und mit einer Feuchtigkeit eingebracht wird, die sowohl auf die jeweilige Konzentration der Verseuchung abgestellt sind als auch das jeweilige Rückhaltevermögen des kontaminierten Bodens in der Weise berücksichtigen, daß dieses nicht überschritten wird, werden Ausschwemmungen des Bodens, zu starke und zu geringe örtliche Konzentrationen der Biomasse, insbesondere Nesterbildungen, und Verunreinigungen des Grundwassers durch unkontrolliert abfließendes Gemisch aus Wasser und Biomasse ebenso vermieden wie die Tragfähigkeit des Bodens herabsetzende Verschlammungen. Insbesondere die Regulierung der Feuchte, mit der die Biomasse in die einzelnen Bohrungen und in der jeweils vorgegebenen Bohrungstiefe eingebracht wird, sorgt dafür, daß keine Ausschwemmungen und damit eine unkontrollierte Zufuhr der Mikroorganismen in der Tiefe erfolgt. An Stellen höherer Erdfeuchtigkeit wird die Biomasse beispielsweise mit einem Luft-Wasser-Gemisch geringer Feuchtigkeit zugeführt, wogegen an trockenen Stellen die Zufuhr der Biomasse mit einem hohen Wasseranteil vorgenommen wird.

Damit das Eindringen der Biomasse in das verseuchte Erdreich sichergestellt ist, wird die Biomasse mit einem variablen Druck eingebracht, der auf die jeweilige Durchlässigkeit des kontaminierten Bodens abgestellt wird. Während bei durchlässigen, körnigen Bodenschichten ein geringer Druck für das Einbringen der Biomasse ausreicht, muß bei undurchlässigen, bindigen Böden mit sehr hohen Drücken gearbeitet werden, die durchaus mehrere hundert bar betragen können.

Die Veränderung sowohl der aus Biomasse und Feuchte bestehenden, an der jeweiligen Stelle einzubringenden Menge als auch des aufzuwendenden Druckes erfolgt beim erfindungsgemäßen Verfahren entsprechend der Lage und Konzentration der Verseuchung, d.h. ist nicht nur veränderlich bezüglich der horizontalen Erstreckung sondern auch bezüglich der vertikalen Mächtigkeit der räumlichen Verseuchung. Das gesamte Volumen der z.B. beim Niederbringen der Bohrungen in ihrer Lage und Konzentration ermittelten Verseuchung wird auf diese Weise gezielt mit den adaptierten Mikroorganismen versorgt, so daß die biologischen Zersetzungsvorgänge gesteuert und innerhalb kürzester Zeit ablaufen. Jede der zur gezielten Zufuhr der Biomasse eingebrachten Bohrungen kann hierbei zu einer Meßstelle umfunktioniert werden, um einerseits die ablaufenden Zersetzungsvorgänge zu überwachen sowie ggf. Nährstoffe und weitere Biomasse zuzuführen und andererseits das Endergebnis der biochemischen Zersetzung zu überprüfen.

Gemäß einem weiteren Merkmal der Erfindung kann außerhalb der verseuchten Fläche mindestens eine Brunnenbohrung zur Feuchteregulierung und/oder zur Absenkung des Grundwasserspiegels im Bereich der Verseuchung eingebracht werden. Hierdurch wird verhindert, daß Biomasse und/oder Nährstoffe, beispielsweise Nitrate, in das Grundwasser gelangen, wenn die Verseuchung bis in das Grundwasser hinabreicht.

Mit der Erfinung wird schließlich vorgeschlagen, jede Bohrung mit einem perforierten Rohr auszukleiden, in das eine Injektionslanze einführbar ist, deren Injektionsbereich durch zwei im jeweils vorgegebenen Abstand voneinander angeordnete Dichtringe eingestellt wird. Auf diese Weise ist es möglich, in jede Bohrung entsprechend der zuvor ermittelten Lage und Konzentration der Verseuchung die entsprechende Menge an Biomasse unter Druck und gezielt einzubringen, wobei die jeweils erforderliche Verteilung der Biomasse in senkrechter Richtung sichergestellt wird.

Zur Steuerung der in die einzelnen Bohrungen einzubringenden Mengen und einzuhaltenden Injektionsbereiche wird ein Computer benutzt, der vorzugsweise zusammen mit den Tanks für Biomasse und Nährstoffe und den zur Durchführung des Verfahrens erforderlichen Pumpen in einem Container untergebracht ist, der am Rand des verseuchten Gebiets aufgestellt wird. Die Brunnenbohrung kann hierbei zur Bereitstellung der erforderlichen Feuchtigkeit herangezogen werden. Außerdem ist es möglich, mit Hilf des Computers sowohl das Bohrgerät als auch das Injektionsgerät zu steuern.

Das erfindungsgemäße Verfahren ist insbesondere geeignet, um großflächige und in größerer bis größter Tiefe liegende Verseuchungen zu beseitigen, wobei auch eine vorhandene Bebauung nicht abgerissen werden muß, da die Bohrungen nicht nur senkrecht, sondern auch schräg ins Erdreich oder durch vorhandene Gebäudeböden hindurch geführt werden können. Außer der Anwendung an Ort und Stelle der Verseuchungen ist es selbstverständlich ebenfalls möglich, das erfindungsgemäße Verfahren dann anzuwenden, wenn der verseuchte Boden zuvor ausgehoben und an anderer Stelle mit einer Mächtigkeit angehäuft worden ist, die die Anwandung der eingangs beschriebenen Verfahren des Aufsprühungs oder Verrieselns der Biomasse nicht gestattet.

Das erfindungsgemäße Verfahren soll nunmehr anhand eines Ausführungsbeispiels unter Zuhilfenahme von Zeichnungen erläutert werden; von denen zeigt:

Fig. 1 eine perspektivische Darstellung einer Verseuchung größerer Tiefe mit einem senkrechten Schnitt durch die verseuchten Bodenschichten und

Fig. 2 eine Perspektive einer mit einem perforierten Rohr ausgekleideten Bohrung mit eingeführter Injektionslanze.

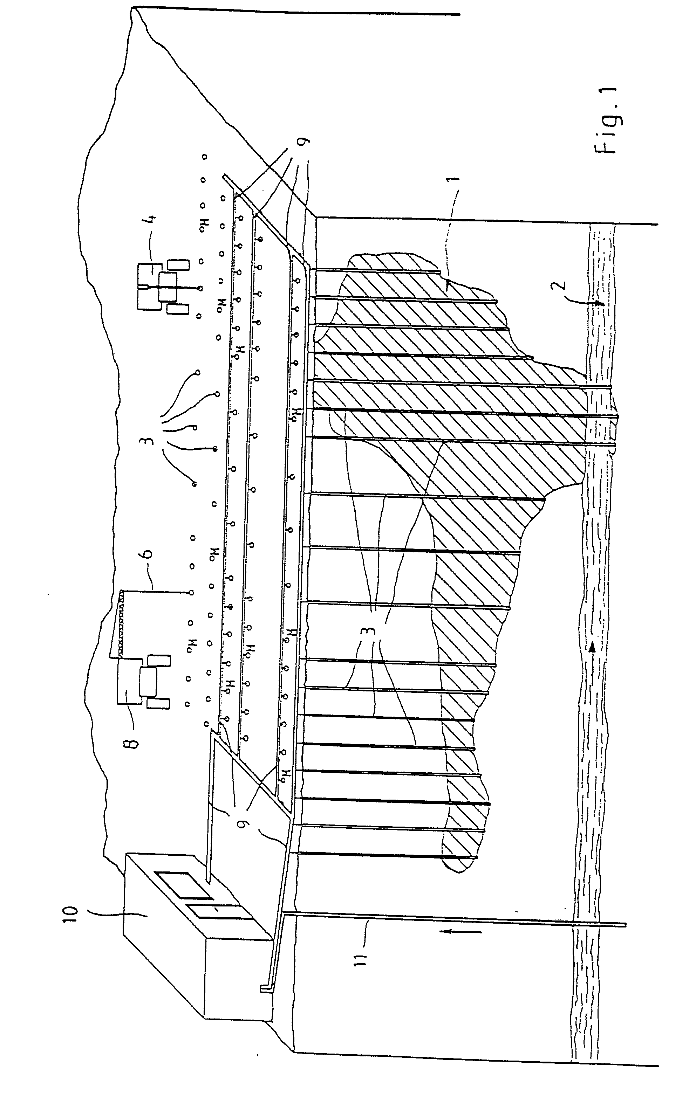

Die beispielsweise durch Eindringen von Mineralöl bis in tiefe Bodenschichten hervorgerufene Verseuchung 1 ist in Fig.1 durch einen schraffierten Bereich dargestellt. Die Darstellung zeigt, daß die räumliche Verseuchung 1 bis in tiefe Bodenschichten reicht, die beim Ausführungsbeispiel vom Grundwasser 2 durchflossen werden. Die Fließrichtung des Grundwassers 2 ist durch einen Pfeil in Fig.1 angedeutet.

Nachdem die Lage und Konzentration der Verseuchung 1 durch Analysen und Bodengutachten ermittelt worden sind, werden in der gesamten Fläche oberhalb der Verseuchung 1 Bohrungen 3 eingebracht. Dies geschieht mit Hilfe eines Bohrgerätes 4, das schematisch im rechten oberen Teil der Fig.1 dargestellt ist. Die Anzahl der Bohrungen 3, ihr Abstand voneinander und ihre Tiefe werden hierbei entsprechend der Lage und der Konzentration der Verseuchung 1 anhand eines zuvor erstellten Sanierungsplanes gewählt. Hierbei werden die Bohrungen 3 numeriert, wobei jeder Bohrlochnummer die Bohrlochtiefe und der Injektionsbereich zugeordnet werden, d.h. derjenige Bereich, in dem über die jeweilige Bohrung 3 Biomasse in die Bodenschichten eingebracht werden soll.

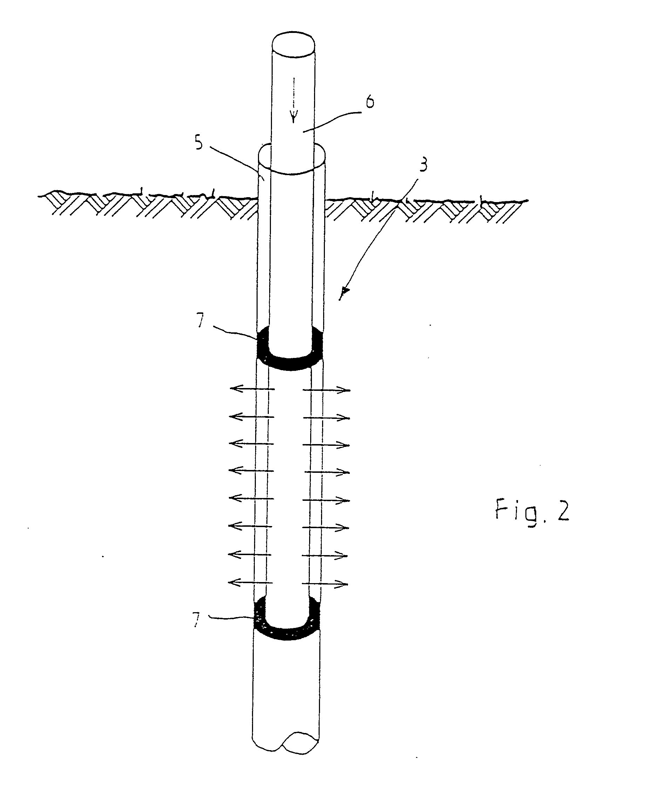

Wie aus Fig.2 hervorgeht, wird nach Einbringen jeder Bohrung 3 das Bohrloch durch ein perforiertes Rohr 5 ausgekleidet. Beim Ausführungsbeispiel erstreckt sich die Perforierung über die gesamte Länge des Rohres 5. In dieses Rohr 5 kann eine Injektionslanze 6 eingeführt werden, die am vorderen Ende mit einer größeren Anzahl von Injektionsöffnungen ausgebildet ist, wie die in Fig.2 eingezeichneten Pfeile erkennen lassen. Um den jeweiligen Injektionsbereich festzulegen, sind am vorderen Ende der Injektionslanze 6 und im vorgegebenen Abstand hiervon jeweils ein Dichtring 7 angeordnet. Jeder Dichtring 7 dichtet den ringförmigen Raum zwischen der Injektionslanze 6 und dem perforierten Rohr 5 in axialer Richtung ab, so daß das über die Injektionsöffnungen der Injektionslanze 6 austretende Medium nur innerhalb des durch die beiden Dichtringe 7 vorgegebenen Bereiches in den Ringraum zwischen Rohr 5 und Injektionslanze 6 austreten kann. Aus diesem Ringraum gelangt das Medium anschließend durch die Perforierungen des Rohres 5 in das Erdreich.

Anhand der Lage und Konzentration der Verseuchung 1 wird ein Sanierungsplan erstellt, der unter anderem die Menge der im jeweiligen Injektionsbereich auszubringenden Biomasse und den hierbei aufzubringenden Druck enthält. Der Druck wird hierbei unter Berücksichtigung der Durchlässigkeit des kontaminierten Bodens im jeweiligen Injektionsbereich der jeweiligen Bohrung 3 gewählt. Die im jeweiligen Injektionsbereich einzubringende Menge aus Biomasse und Feuchte wird nicht nur auf die jeweilige Konzentration der örtlichen Verseuchung abgestellt, sondern berücksichtigt auch das Rückhaltevermögen des kontaminierten Bodens, so daß sichergestellt wird, daß die eingebrachte Menge das jeweilige Rückhaltevermögen nicht überschreitet. Hierdurch wird verhindert, daß z.B. durch zu hohe Feuchtigkeit sowohl Schadstoffe als auch Biomasse aus dem jeweiligen durch die Injektion versorgten Bereich ausgeschwemmt und die Bodenschichten verschlammt werden.

Die Injectionslanze 6 wird jeweils mit Hilfe eines in Fig.1 schematisch dargestellten Injektionsgerätes 8 in die entsprechende Bohrung 3 abgesenkt, und zwar unter Einhaltung der jeweils erforderlichen Absenktiefe und des für jede Bohrung 3 festgelegten Injektionsbereiches. Die Steuerung des Injektionsgerätes 8 erfolgt hierbei durch einen Computer, in dessen Speichern die einzelnen Daten für den Sanierungsplan abgespeichert sind. Auf diese Weise werden alle Bohrungen 3 nacheinander innerhalb ihres durch die räumliche Verseuchung 1 erfaßten Tiefenbereiches mit Biomasse versorgt, wozu es notwendig werden kann, in jeweils einer Bohrung 3 in unterschiedlichen Tiefen unterschiedliche Mengen aus Biomasse und Feuchte und ggf. mit unterschiedlichem Druck zu injizieren, und zwar in Abhängigkeit einerseits von der Lage und andererseits von der Konzentration der Dekontaminierung. Nach Abschluß sämtlicher Injektionen ist die gesamte räumliche Verseuchung 1 gezielt mit Biomasse aus adaptierten Mikroorganismen versorgt, so daß der mikrobiologische Umsetzungsvorgang optimal abläuft.

Nach diesem Einbringen der auf den jeweiligen Schadstoff abgestimmten Biomasse werden zumindest einige der Bohrungen 3 über oberirdisch verlegte Verbindungsleitungen 9 mit in einem Container 10 angeordneten Tanks verbunden. Diese Tanks enthalten einerseits Biomasse und andarer-

seits Nährstoffe, die zusmmen mit der notwendigen Feuchtigkeit bei Bedarf den einzelnen Bohrungen 3 zugeführt werden, um die in die einzelnen Bohrungen 3 eingebrachten Organismen zu versorgen bzw. zu ergänzen. Diese Versorgung und Ergänzung erfolgt in Abhängigkeit von einer Kontrolle der in der Tiefe ablaufenden mikrobiologischen Umsetzung. Zu diesem Zweck werden zumindest einige der Bohrungen 3 zumindest zeitweise in Meßstellen umfunktionert. Die zu einem bestimmten Zeitpunkt als Meßstellen umfunktionierten Bohrungen 3 sind in Fig.1 durch den Buchstaben "M" gekennzeichnet. Über diese Meßstellen wird der Ablauf der mikrobiologischen Umsetzung überwacht. Auch dies geschieht mit Hilfe eines im Container 10 angordneten Computers, der beispielsweise die entsprechenden Pumpen und Ventile steuert, damit die mikrobiologische Umsetzung gezielt und überwacht abläuft.

Beim Ausführungsbeispiel ist in Fließrichtung des Grundwassers 2 vor der Versuchung 1 eine Brunnenbohrung 11 eingebracht worden. Die Brunnenbohrung 11 dient zur Bereitstellung von Feuchtigkeit, die den einzelnen Bohrungen 3 entsprechend dem Ablauf der mikrobiologischen Umsetzung vorzugsweise zusammen mit Nährstoffen zugeführt wird. Die Brunnenbohrung 11 wird ebenfalls zur Absenkung des Grundwasserspiegels verwendet, so daß bis zum Abschluß der mikrobiologischen Umsetzung die Versuchung 1 nicht mehr im Grundwasserbereich liegt.

Durch die ständige bzw. periodische Kontrolle des Ablaufs und des Ergebnisses der in der Tiefe ablaufenden mikrobiologischen Umsetzung ist es bei dem voranstehend geschilderten Verfahren möglich, einerseits den Ablauf des Sanierungsplanes und andererseits das Endergebnis der Sanierungsmaßnahme festzustellen. Trotz der in der Tiefe ablaufenden mikrobiologischen Umsetzung kann somit sichergestellt werden, daß die Versuchung 1 beseitigt wird.

Obwohl das Verfahren voranstehend anhand einer Dekontaminierung einer Versuchung an Ort und Stelle beschrieben worden ist, läßt sich das Verfahren natürlich auch dann anwenden, wenn der versuchte Boden zuvor ausgehoben und an anderer Stelle in einer Mächtigkeit, beispielsweise in einem Trog oder auf einem geeigneten Untergrund aufgeschüttet worden ist, die eine zeitgerechte Dekontaminierung durch Aufsprühen oder Verrieseln der Biomasse wegen der großen Tiefe und/oder der unterschiedlichen Konzentration der Versuchung ausschließt.

Bezugsziffernliste:

    1 Versuchung
    2 Grundwasser
    3 Bohrung
    4 Bohrgerät
    5 Rohr
    6 Injektionslanze
    7 Dichtring
    8 Injektionsgerät
    9 Verbindungsleitung
    10 Container
    11 Brunnenbohrung

## Ansprüche

1. Verfahren zur Dekontaminierung von versuchten Bodenschichten beliebiger Tiefe mittels Biomasse aus Mikroorganismen, die über eine Mehrzahl von in die versuchten Bodenschichten niedergebrachten Versorgungsbohrungen entsprechend der zuvor ermittelten Lage der Versuchung ebenso wie Nährstoffe eingebracht werden, wobei über Kontrollbohrungen eine Kontrolle der ablaufenden mikrobiologischen Umsetzung erfolgt, **dadurch gekennzeichnet,** daß die Biomasse aus adaptierten Mikroorganismen entsprechend der Lage und Konzentration der räumlichen Versuchung sowohl bezüglich der horizontalen Erstreckung als auch bezüglich der vertikalen Mächtigkeit der kontaminierten Bodenschichten mit einem auf die Durchlässigkeit des kontaminierten Bodens abgestellten Druck und in einer auf die Konzentration der Versuchung abgestellten sowie das Rückhaltevermögen des kontaminierten Bodens nicht überschreitenden Menge aus Biomasse und Feuchte eingebracht wird.

2. Verfahren nach Anspruch 1, dadurch gekennzeichnet, daß außerhalb der versuchten Fläche mindestens eine Brunnenbohrung (11) zur Feuchteregulierung und/oder zur Absenkung des Grundwasserspiegels im Bereich der Versuchung (1) eingebracht wird.

3. Verfahren nach Anspruch 1, dadurch gekennzeichnet, daß jede Bohrung (3) mit einem perforierten Rohr (5) ausgekleidet wird, in das eine Injektionslanze (6) einführbar ist, deren Injektionsbereich durch zwei im jeweils vorgegebenen Abstand voneinander angeordnete Dichtringe (7) eingestellt wird.

Fig. 1

Fig. 2